# EUROPEAN PATENT SPECIFICATION

(11) **EP 3 521 228 B1**
(45) Date of publication and mention of the grant of the patent: **22.07.2020**
(21) Application number: 19154436.0
(22) Date of filing: 30.01.2019
(51) Int. Cl.: B65H 75/44

(54) **CABLE REEL**
KABELTROMMEL
BOBINE DE CÂBLE

(30) Priority: 31.01.2018 GB 201801589
(43) Date of publication of application: 07.08.2019
(73) Proprietor: Luceco PLC, London W1U 6LN (GB)
(72) Inventor: GUBBINS, Stephen, Telford, Shropshire TF3 3BD (GB)
(74) Representative: Somervell, Thomas Richard

(56) References cited:
- EP-A1- 2 944 595
- WO-A1-2009/132654
- DE-U1- 9 203 351
- GB-A- 2 458 026
- US-A- 4 979 693

## Description

### Field of Invention

The invention relates to portable cable reels. More specifically, the invention relates to cable reels comprising a hanger, such as a hook, for hanging the cable reel onto a structure, such as a ladder rung.

### Background

Cable reels are typically used to carry various types of electrical wires. Commonly, cable reels are used as portable mains electrical outlets for devices that require an electrical supply a substantial distance away from a permanently-mounted electrical socket such as a wall-mounted socket. Such cable reels comprise a cable wound around a spool, wherein the cable has an electrical plug (integral with a first end of the cable) electrically connected to an electrical socket array on a flanged side of the spool. The cable can be unwound to a desired length to bridge the distance between the power cable of a device and the permanently mounted socket. Another advantage of spool is that they usually provide a plurality of sockets.

Cable reels are often rotatably disposed on a frame made from a bent tube that also provides a handle bar for carrying or for hanging the cable reel up. A typical scenario is that the powered device may have to be lifted (for instance nearer to a ceiling or to a tree branch level) and so the cable reel that carries the extension sockets must be located appropriately high above ground. In such a scenario, it is not uncommon to use the handle bar of the cable reel frame to hang the cable reel up, e.g. on a ladder rung. As the handle is typically formed from an end of a tubular frame element, the handle usually has the shape of a generally cylindrical rod, primarily for gripping it with a hand, rather than for hanging the reel up.

JPH07303324A discloses a cable reel including a hook-shaped extension of a handle component that can be pivoted to extend the hook-shaped extension away from the housing.

US3021091 relates to a portable clothesline requiring at least one hook on each opposing side in order to support the clothesline using tension.

US2007/0159772 discloses a power outlet that includes a slidable support for hanging up the power outlet.

With the above arrangements there is a risk of the hanger slipping off and the cable reel falling down, potentially pulling a connected device with it. It is an aim of the invention to alleviate these problems.

DE 9203351U1 discloses an additional strut connected to a support bracket of a cable reel using a thumbscrew cap or nut.

### Summary

According to a first aspect of the invention there is provided a cable reel according to claim 1. The cable reel comprises a reel support for rotatably supporting a spool, a spool rotationally disposed on the reel support about an axis of rotation of the spool, and a hanger for hanging up the reel support. The hanger is pivotable about a pivoting axis that is parallel to the spool axis to thereby be extendable from a retracted position to an extended position in which the hanger projects further from the reel support than in the retracted position.

The cable reel is a reel for cables, such as for mains electrical appliances or data cables. The hanger provides a means of suspending the cable reel from an object or surface such as the rung of a ladder.

The spool is rotationally disposed on the reel support about an axis of rotation. With reference to the axis of rotation, the reel support may, in some embodiments, comprise a peri-axial support structure that extends beyond the spool, thereby defining a silhouette periaxially around the spool. The hanger may be inside the silhouette when in its retracted position.

The hanger allows the cable reel to be hung up at a convenient location such as on the rung of a ladder or at the end of a table. By providing a retractable/extendable hanger, the hanger can advantageously be retracted when use of the hanger is not required. This is useful for when the cable reel is transported. For example, cable reels may be transported in vans where it is important to save space. Retraction of the hanger reduces the overall space required by the cable reel and allows for objects to be placed closer to the cable reel than would otherwise be the case. It may also be easier for a user to transport the cable reel when the hanger is in a retracted position. Furthermore, there is a lower likelihood of the hanger becoming entangled with other items, as can be imagined might otherwise happen in a back of a van crowded with other utensils. Furthermore, this allows a rigid hanger to be provided. A rigid hanger facilitates the single-handed hanging up of a cable reel.

A hanger that can be extended from the spool can be made to larger size than might otherwise be practical for a fixed hanger, allowing the hanger in the extended position to project further away from the spool, while maintaining a more compact silhouette in the retracted position. As can be imagined, conventional cable reels may comprise an end of a handle that may be used as a hanger but which is rigid and fairly close to the drum body. The hanger of the invention may extend from the drum by a distance corresponding to a side of the drum and so extend further than would be considered practical in a fixed-handle design. The hanger can be dimensioned so that it provides for more space between the hanger and any cable that is wrapped around the spool than there would be in a retracted condition.

The hanger is pivotably disposed on the reel support. The hanger is extendable by a rotation mechanism, about the pivoting axis. In some embodiments, the hanger is mounted to the reel support via a fixed mounting location on the reel support. This facilitates for the hanger to be extended from the retracted position, and/or retracted from the extended position in a single movement. By a single movement, it is meant that the movement to actuate the hanger is a mono-linear motion, in a single direction of rotation, without requiring an additional motion for bringing the hanger into the fully extended or retracted position. To this end, the hanger may be mounted to the cable support on a fixed mounting point, such as a fixed axis, i.e. an axis fixed on the cable support in a manner allowing rotation. In an alternative embodiment not forming part of the claimed invention, the hanger may be mounted to the cable support via linear extension mechanism such as a rail or telescopic mechanism that confines the hanger movement relative to the cable support in one linear direction. This facilities easy manual switching between the extended or retracted condition. This is helpful in practice: it can be imagined that a user may wish to hang the cable reel up, e.g. on a rung of a ladder, whilst he is balancing on a ladder or has restricted mobility of his body. With the invention, the user is able to extend the hanger with a single manual action.

Furthermore, this facilitates the provision of a biasing mechanism, either biasing into the extended position, or biasing into the retracted position, because a biasing mechanism, such as a spring, is only required to act in one direction.

The reel support comprises a structure providing a hanger support member on which the hanger is pivotably disposed.

The hanger support member is an elongate structure providing the pivot axis on which the hanger is pivotably disposed. The hanger is configured to pivot about the pivot axis provided by the hanger support member. Existing cable reel frames comprise elongate members parallel to the reel axis, and therefore it is simple to utilise existing designs of cable reels with the invention by mounting the hanger to the elongate member or by providing an elongate member with the functionality of a hanger support member.

The hanger may extend from a part of the hanger support member in a manner leaving a portion of the hanger support member accessible to a hand of a user, such that the portion thereby provides a handle.

The hanger support member may comprise a user grip portion configured to receive the hand of a user at least when the hanger is in the retracted position. When the hanger is in the retracted position it is desirable for the cable reel to be easily carried. The hanger support member can be utilised for this purpose. Furthermore, the hanger support member may be dimensioned for gripping by a hand, i.e. it may be provided by a cylindrical structure of sufficient large diameter for it to be held ergonomically by a hand. If the hanger support member provides a handle in this manner, it is not necessary for the hanger to be designed as a handle. This allows the hanger to be designed for a purpose other than a handle. For instance, the hanger may be shaped relatively thin so as to easily fit into a narrow gap, even though a thin shape may not be convenient for a handle.

The reel support comprises a housing structure for the spool comprising two panels, each panel providing a frame in which a flange of the spool is rotationally disposed, and wherein the hanger support member extends between the two panels.

The hanger-support member can advantageously be utilised to provide integral structural support to the reel support by joining two panels together. The hanger-support member can also be advantageously placed so that there is sufficient space in between outer surfaces of the member and other components of the cable reel for a user to manually grip the hanger-support member when he wishes to transport the cable reel.

In some embodiments, the elongate structure of the support member is positioned with its elongate extension parallel to the axis of rotation of the spool.

The hanger may be configured such that the hanger is biased to assume the extended position under the weight of the cable reel when the cable reel is supported by the hanger. This may be achieved providing a contact location of the hanger for hanging the hanger up in a way in which it faces in the direction of the cable reel.

The hanger may comprise a contact location that will be the part of the hanger to be in contact with the object on which the hanger is hung up. For instance, for a hook-shaped hanger, it will be expected that the inside of the hook gape will provide the contact location and the outside of the hook will not be expected to be in contact where the hook is hung up. The hanger can be configured such that the weight of the cable reel biases the hanger in the extended position when the cable reel is suspended from the hanger. This reduces the risk that the hanger collapses into the retracted position when the cable reel is hung up.

In some embodiments, the hanger is provided by a hook structure comprising a hook gape between a hook end and a shank, the shank disposed on the reel support.

The hook structure provides for the hanger to have a single connection to the reel support via the shank. This means that the hanger can easily be hooked onto a structure that is laterally closed and therefore inaccessible for a hanger, such as a rung of a ladder. This improves the versatility of the cable-reel, allowing it to be hung from objects that are laterally inaccessible such as the steps on a ladder.

In some embodiments, at least part of the hook structure comprises a lattice structure. Use of the lattice structure strengthens the hook while rendering it more suitable for manufacturing by one-piece moulding. It will be appreciated that it is more difficult to use a one-piece moulding where the desired object is a solid component.

In some embodiments, the bend of the hook comprises a concave recess in a surface of the bend. The concave recess increases the clearance between the hook and any cabling on the cable reel, and so facilitates access for finger or hand to pull the hanger into the extended position.

In some embodiments, the hook structure extends, in the shank-to-hook end direction, in a direction parallel to the spool axis, or, with reference to the flanges, perpendicular to the flanges of the spool.

This reduces the risk of the reel being lifted up, off the structure from which it hangs, when the spool of the cable reel is rotated upward, which may otherwise occur if the spool is forcefully rotated. Also, for structures such as a ladder rung, by orienting the hook structure perpendicular to the flanges, this urges a spool into an orientation in which the sockets on the spool face outward a direction perpendicular to the rung (usually outward), and so are better accessible. A further advantage is that when the reel is suspended from a ladder rung, a greater proportion of the cable reel will hang vertically, ie at a certain angle away from the inclined angle of a standing ladder, because the planar area of the surface of the cable reel that is parallel with the sides of the ladder (i.e. the side substantially defined by the thickness of the spool rather than the radius of the spool) is smaller. This reduces the risk of the cable reel resting against a rung of a ladder. As a result, it is more likely that the cable reel will hang substantially vertically, and therefore clear of an adjacent rung, and therefore there is less chance of the reel partially resting on a rung and thereby being not folly hooked.

In some embodiments, the hanger is provided by a loop structure extending from the shank, the shank disposed on the reel support.

In some embodiments, the hook structure comprises a throat having a depth that is at least a third of the length of the shank of the hook structure. This reduces the risk that the cable reel is knocked off a hung position, for example if impacted whilst it is hung. In some embodiments, the hanger comprises a hanger grip portion, wherein the hanger grip portion comprises a slip-reducing surface portion configured to restrict slippage of the hanger when in use, for example, when hung on a metal surface of the rung of a ladder. The hanger grip portion may be constructed with rubber or a rubberised material. The rubber for the hanger grip portion may be applied over a hanger portion. Alternatively, rubberised material of the hanger grip portion and another material (such as plastic) of the hanger can be moulded together.

In some embodiments, the cable reel comprises an extending biasing mechanism to bias the hanger in the extended position. In some embodiments, the cable reel comprises a retracting biasing mechanism to bias the hanger in the retracted position.

In some embodiments, the retracting biasing mechanism exhibits a biasing force in the retracted position that is weaker than the weight of the cable reel, thereby maintaining the hanger in the extended position when the cable reel is supported by the hanger.

In some embodiments, the retracting biasing mechanism comprises a releasable retaining mechanism, such as a clip, to hold the hanger in the retracted position.

In some embodiments, the hanger is configured to be biased towards the extended position under the weight of the cable reel when the cable reel is supported by the hanger. This reduces the risk of dislocation of the hanger from the extended position since gravitational force on the cable reel acts to maintain the hanger in the extended position. The configuration may be provided by locating the spool axis between the hanger mounting point and the location at which the engaging end of the hanger is positioned in the retracted position.

In some embodiments, the hanger is constructed of moulded plastic. This reduces the likelihood of damage to any object on which it is hung up, or to reduce the likelihood of damage to cabling on the spool when the hanger is in a retracted position and therefore proximate to the cabling. A further advantage of moulding the hook is that relatively complex shapes that are sufficiently rigid can be created using moulding techniques. Therefore the hook can be manufactured to be ergonomic and to visually blend in with the reel support for improved aesthetics. Use of the plastic moulding helps ensure that any electrical faults would not result in conduction of electricity from the reel support to surfaces attached to the hook, such as a metal ladder.

The hook may alternatively be constructed from metal using metal casting or pressing.

In some embodiments, a profile of the hanger extending from the reel support to an end of the hanger that projects furthest from the reel support when the hanger is in the extended position comprises a taper towards the end of the hanger. The taper allow the bulk volume of the hanger to be reduced while maintaining a sufficiently strong structure.

The cable reel may comprise an electrical cable operable to be wrapped around the spool, wherein the electrical cable is electrically connected to one or more electrical sockets accessible via an outer surface of the spool.

The cable reel may comprise an data cable operable to be wrapped around the spool, wherein the data cable is conductively connected to one or more data sockets accessible via an outer surface of the spool.

According to a this disclosure there is provided a method of mounting a cable reel having a spool and hanger disposed on a reel support comprising the steps of: extending or retracting the hanger between a retracted position and an extended position in which the hanger projects further from the spool-support than in the retracted position; and attaching the hanger to an external object.

The method may further include the step of extending or retracting the hanger by pivoting the hanger.

The method may further include the step of extending or retracting the hanger by respectively releasing or securing the hanger using a snap-fit connection or a clip.

The method may further comprise the step of retracting the hanger using a single movement to a retracted position.

According to a second aspect of the invention, there is provided a method of manufacturing a cable reel comprising the steps of: providing a reel support for rotatably supporting a spool, the spool being rotationally disposed on the reel support about an axis of rotation; attaching a hanger to the reel support, and providing a mechanism permitting the hanger to be pivotable about a pivoting axis that is parallel to the spool axis of rotation to thereby be extended from a retracted position to an extended position in which the hanger projects further from the reel support than when in the retracted position while the hanger remains attached to the reel support.

The methods in accordance with the second and third aspect may comprise steps of using or incorporating any structural features described in relation to embodiments of the first aspect.

### Brief Description of the Drawings

Figure 1 shows a perspective view of a cable reel wherein a hanger is in an extended position.
Figure 2 shows the cable reel of Figure 1 wherein the hanger is in a retracted position.

### Detailed Description

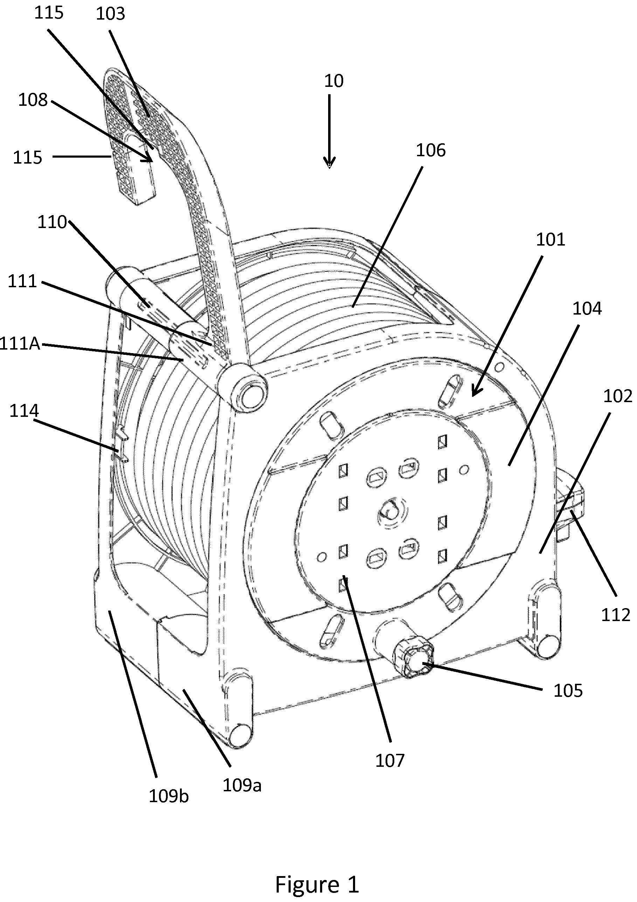

With reference to Figure 1 there is shown a cable reel 10 according the invention. The cable reel 10 comprises a spool 101 that is mounted within a reel support 102 having opposing body members 109a and 109b. The body members 109a and 109b provide panels defining a peri-axial silhouette of the cable reel 10. The spool 101 comprises two opposing flanges (one shown referenced as 104) between which an electrical cable 106 is wound. Each body member 109a and 109b comprises an aperture shaped to rotationally accommodate one of the opposing flanges 104 of the spool 101. The spool 101 is operated with a spool handle 105 to wind or unwind the electrical cable 106. The electrical cable 106 is electrically connected at one end to electrical sockets 107. The other end of the electrical cable is provided with a plug 112 connectable to a mains wall socket (not shown). The electrical cable 106 is accessible via apertures in between the body members109a and 109b.

A hanger 103 is attached to the reel-mount 102. The hanger 103 is a rigid structure and is shown in an extended position. The hanger 103 is mounted on a hanger support member 110, which is a generally elongate structure between the body members 109a and 109b. To this end, the hanger 103 comprises a base portion 111 that is rotationally disposed on the hanger support member 110. For instance, the base portion 111 may comprise a hollow sleeve that is rotationally mounted to the hanger support member 110. It will be appreciated that the hanger 103 can be attached at any location on the reel support 102. However, the positioning of the shown embodiment is advantageous as discussed in more detail below.

The hanger support member provides an axis parallel to the axis of rotation of the spool 101, and so the hanger 103 is rotational about an axis parallel to the axis of rotation of the spool 101. The hanger support member 110 is fixed relative to the body member 109a and 109b, and thereby the hanger 103 is pivotable to the extended position shown in Figure 1 using a single manual motion (in this example, a single manual rotation action). In other words, a user is only required to perform a single pivoting action in order to move the hanger between the extended and retracted positions. It will be appreciated that in alternative embodiments, not forming part of the claimed invention, the mono-linear motion may be a single sliding motion instead of a rotational motion.

The hanger 103 is mounted at a corner of the reel-mount 102. This allows the hanger 103 to extend as much as practical from one end (the corner) to another end (an opposite corner) of a side of the reel support 102 whilst being rotationally retractable to be within the silhouette of the reel support 102 when retracted. In short, the hanger 103 can be longer than would be the case if the axis was not close to the corner of the reel support 102. The hanger 103 comprises a hook with a sufficiently sized throat 108 to provide for the hook to be attached to an elongate object such as the rungs of a ladder. When the hook 103 is attached to an object, this allows the cable reel 10 to hang from said object. Because the contact location of the throat 108 faces toward the cable reel 10, when gravitational force acts on the cable reel 10, the weight of the cable reel 10 will pull in the direction opposite the extended hanger position, and so the hanger 103 is biased, in use, by the weight of the cable reel 10, in the extended position. Any additional downwards force (such as due to the weight of electrical cables) will serve to further bias the hanger in the extended position. Advantageously, additional downward force acting on the cable contributes to the bias of the hanger in the extended position rather than acting against any mechanism for attaching the hangar to an elongate object. For ease of use, the support member 110 and hangar 103 may incorporate a pivot-range-limiting arrangement such as interacting lugs (not shown) to restrict rotation of the hanger 103 beyond a desired amount. Alternatively or in addition, a pivot-range-limiting arrangement may be provided on the reel mount 102 and the hanger 103. Figure 1 shows a tab 114 mounted on the body member 109b that is configured for engagement with a corresponding recess 115 on the hanger 103. The hanger 103 cannot be pivoted further towards the retracted condition than is permitted by the abutment of the recess 115 against the tab 114. It will be understood that the tab 114 is an optional structure.

In the illustrated embodiment, the hanger 103 is in the shape of a hook (and therefore the hanger may be henceforth referred to as a hook) with a hook gape and throat. The length of the throat and gape of the hook forming the hanger 103 provides for the cable reel to maintain attachment to an object even if the cable reel is knocked or otherwise accidentally rotated by a certain degree.

The hook may be manufactured from moulded plastic in order to prevent damage to the object to which it is attached. The hanger 103 may include rubberised material (not shown) so that there is improved grip between the hook and the object to which it is attached. As illustrated, the hanger 103 may include a lattice portion to provide for an improved strength to weight ratio. The lattice portion facilitates the process of manufacturing a hook using a single-piece mould.

The hook structure of the hanger 103 is oriented, in the shank-to-hook end direction, in a direction perpendicular to the flanges of the spool. Thereby, any rotation of the spool is perpendicular to the shank-to-hook end direction. This avoids the risk of a spool rotation accidentally leading to lifting the hook off the structure from which it depends, as this may otherwise occur if the shank-to-hook end direction was parallel to the flanges of the spool.

The planar profile of the hanger that is parallel to the flanges of the spool incorporates a taper extending in the shank-to-hook direction in order to maximise strength in the hanger whilst minimising increase in undesirable bulkiness.

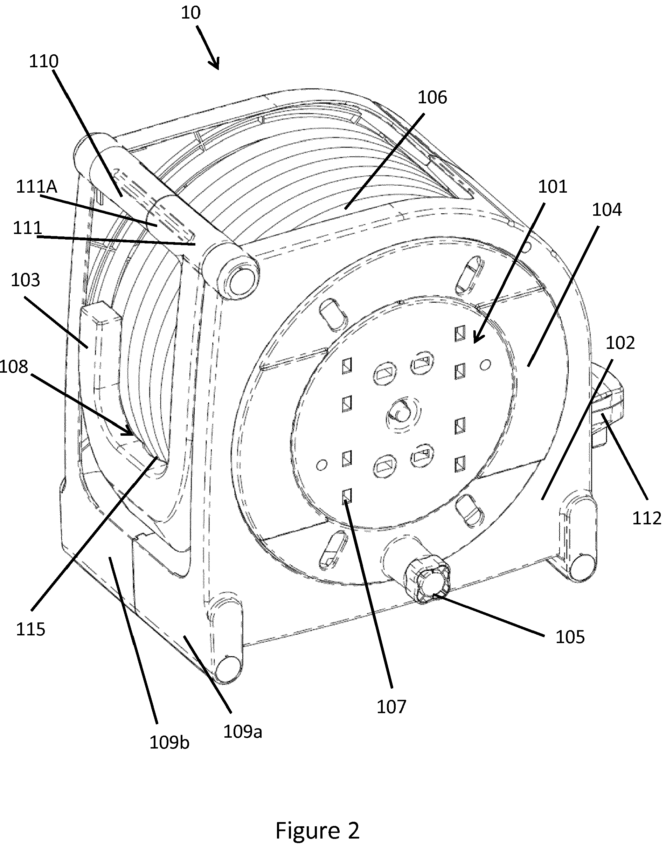

A concave recess 115 is provided in a surface of the hanger 103 to increase clearance between the hook 103 and cabling 106. This facilitates finger access for extending the hook from the retracted position (see also Figure 2).

With reference to Figure 2, there is shown the cable reel 10 of Figure 1 with the hanger 103 in a retracted position. In this position, the hanger 103 is retracted within a silhouette formed by the reel support and therefore the cable-reel remains more compact than in the Figure 1 condition. When the hanger 103 is in the closed position, a portion of the support-member 110 remains accessible for a user to grip in order to carry the cable reel. Comparison of Figures 1 and 2 shows that the support member 110 is useable as a handle, i.e. accessible for a hand, in both the extended position and the retracted position, while also providing a pivoting axis for the hanger 103. In the illustrated embodiment, the base portion 111 comprises a sleeve element 111A that is provided over the support member 110 and thereby provides a flush cylindrical surface. The sleeve element 111A constitutes part of the hand-accessible part over the support member 110. It can be imagined that this allows the support member to be gripped partially on the support member 110 and partially on the sleeve member 111A of the base portion 111. When gripped in this manner, a user can hold the sleeve element 111 tight enough to inhibit rotation of the hanger 103 while carrying the cable drum on the handle provided by the support member 110.

The retracted position is defined by a pivot-range-limiting arrangement provided by the tab 114 on the body support member 109 and a corresponding recess 115 on the hanger 103 (tab 114 and recess 115 not visible in Figure 2, see description in relation to Figure 1). The hanger 103 may be secured in the closed position, for instance by a snap-fit mechanism via a clip (which may be integral with the tab 114). It will be appreciated that even if the hanger 103 is provided with a snap-fit connection, this may be provided in a manner allowing the hanger 103 to be extended by a single linear motion as a user merely has to increase the amount of force to release the hanger 103.

The support member 110 is positioned sufficiently away from the axis of rotation of the spool 101 so that the hanger 109 can be retracted to the closed position without interfering with the cable 106. The spacing between the cable 106 and the hanger 103 in the retracted position is maintained by a pivot-range-limiting arrangement in the form of the tab 114 and the corresponding recess 115 (see Figure 1), but could be provided by another suitable mechanism, such as a range-limiting arrangement integral with the hanger support member 110. In fact, the inventor envisages for the spool to be dimensioned sufficiently large for the intended length of cable 106 such that the cable reel can be used whether or not the hanger is in the extended or retracted position since the positioning of the hangar does not affect the ability of the cable 106 to be wound or unwound around the spool 105 as the spool 105 is rotated.

## Claims

1. A cable reel (10) comprising:
a reel support (102) for rotatably supporting a spool (101),
a spool (101) rotationally disposed on the reel support (102) about a spool axis of rotation, and
a hanger (103) for hanging up the reel support (102), wherein the hanger (103) is pivotable about a pivoting axis that is parallel to the spool axis of rotation to thereby be extendable from a retracted position to an extended position in which the hanger (103) projects further from the reel support (102) than in the retracted position;
wherein the reel support (102) comprises a hanger support member (110) on the reel support (102) via which the hanger (103) is pivotably disposed on the reel support (102);
wherein the hanger support member (110) is an elongate structure providing the pivot axis on which the hanger (103) is pivotably disposed; **characterized in that**
the reel support (102) comprises a housing structure for the spool, the housing structure comprising two panels (109a, 109b), each panel providing a frame in which a flange of the spool (101) is rotationally disposed, and the hanger support member (110) extends between the two panels (109a, 109b).

2. The cable reel according to claim 1, wherein the reel support comprises a peri-axial support structure that extends beyond the spool (101) thereby defining a silhouette periaxially around the spool (101), and
wherein the hanger (103) in its retracted position is inside the silhouette.

3. The cable reel according to claim 1 or 2,
wherein the hanger (103) is mounted to the reel support (102) via a fixed mounting location on the reel support (102).

4. The cable reel according to any preceding claim,
wherein the hanger (103) extends from a part of the hanger support member (110) in a manner leaving a portion accessible to a hand of a user, the portion thereby providing a handle, and/or,
wherein the elongate structure of the support member (110) is positioned with its elongate extension parallel to the axis of rotation of the spool (101).

5. The cable reel according to any preceding claim wherein the hanger (103) is provided by a hook structure comprising a hook gape between a hook end and a shank, the shank disposed on the reel support, and optionally, wherein at least part of the hook structure comprises a lattice structure.

6. The cable reel according to claim 5 wherein the bend of the hook further comprises a concave recess in a surface of the bend, and optionally, wherein the hook structure extends in a direction perpendicular to the flanges of the spool (101).

7. The cable reel according to any one of claims 1 to 4, wherein the hanger (103) is provided by a loop structure extending from a shank, the shank disposed on the reel support (102).

8. The cable reel according to claim 5 or claim 6, wherein the hook structure comprises a throat having a depth that is at least a third of the length of the shank of the hook structure.

9. The cable reel according to any preceding claim, wherein the hanger (103) comprises a hanger grip portion, and wherein the hanger grip portion comprises a slip-reducing surface portion.

10. The cable reel according to any preceding claim, comprising an extending biasing mechanism to bias the hanger (103) in the extended position.

11. The cable reel according to any preceding claim, comprising a retracting biasing mechanism to bias the hanger (103) in the retracted position; and optionally,
wherein the retracting biasing mechanism exhibits a biasing force in the retracted position that is weaker than the weight of the cable reel (10), thereby maintaining the hanger in the extended position when the cable reel is supported by the hanger (103).

12. The cable reel according to claim 11, wherein the retracting biasing mechanism comprising a releasable retaining mechanism to hold the hanger (103) in the retracted position.

13. The cable reel according to any preceding claim, wherein the hanger (103) is configured to be biased towards the extended position under the weight of the cable reel (10) when the cable reel (10) is supported by the hanger (103).

14. The cable reel according to any preceding claim wherein a profile of the hanger (103) extending from the reel support to an end of the hanger (103) that projects furthest from the reel support when the hanger (103) is in the extended position comprises a taper towards the end of the hanger (103).

15. A method of manufacturing a cable reel in accordance with any one of claims 1 to 14, the method comprising the steps of:
providing a reel support (102) for rotatably supporting a spool (101), the spool (101) being rotationally disposed on the reel support about an axis of rotation;
attaching a hanger (103) to the reel support (102), and
providing a mechanism permitting the hanger (103) to be pivotable about a pivoting axis that is parallel to the spool axis of rotation to thereby be extended from a retracted position to an extended position in which the hanger (103) projects further from the reel support (102) than when in the retracted position while the hanger (103) remains attached to the reel support (102).

## Patentansprüche

1. Kabeltrommel (10), die Folgendes umfasst:
einen Trommelträger (102) zum drehbaren Tragen einer Rolle (101),
eine Rolle (101), die drehbar auf dem Trommelträger (102) um eine Rollendrehachse angeordnet ist, und
einen Aufhänger (103) zum Aufhängen des Trommelträgers (102),
wobei der Aufhänger (103) um eine Schwenkachse schwenkbar ist, die parallel zu der Rollendrehachse ist, um dadurch ausfahrbar zu sein, von einer eingezogenen Stellung zu einer ausgefahrenen Stellung, in welcher der Aufhänger (103) weiter von dem Trommelträger (102) vorspringt als in der eingezogenen Stellung,
wobei der Trommelträger (102) ein Aufhänger-Tragelement (110) an dem Trommelträger (102) umfasst, über das der Aufhänger (103) schwenkbar an dem Trommelträger (102) angeordnet ist,
wobei das Aufhänger-Tragelement (110) eine längliche Struktur ist, die eine Schwenkachse bereitstellt, an welcher der Aufhänger (103) schwenkbar angeordnet ist,
**dadurch gekennzeichnet, dass**
der Trommelträger (102) eine Gehäusestruktur für die Rolle umfasst, wobei die Gehäusestruktur zwei Platten (109a, 109b) umfasst, wobei jede Platte einen Rahmen bereitstellt, in dem ein Flansch der Rolle (101) drehend angeordnet ist, und sich das Aufhänger-Tragelement (110) zwischen den zwei Platten (109a, 109b) erstreckt.

2. Kabeltrommel nach Anspruch 1, wobei der Trommelträger eine periaxiale Tragstruktur umfasst, die sich über die Rolle (101) hinaus erstreckt, wodurch ein Umriss periaxial um die Rolle (101) definiert wird, und
wobei sich der Aufhänger (103) in seiner eingezogenen Stellung innerhalb des Umrisses befindet.

3. Kabeltrommel nach Anspruch 1 oder 2,
wobei der Aufhänger (103) über eine feste Anbringungsposition an dem Trommelträger (102) an dem Trommelträger (102) angebracht ist.

4. Kabeltrommel nach einem der vorhergehenden Ansprüche,
wobei sich der Aufhänger (103) von einem Teil des Aufhänger-Tragelements (110) aus auf eine Weise erstreckt, die einen Abschnitt für eine Hand eines Benutzers zugänglich lässt, wobei der Abschnitt dadurch einen Handgriff bereitstellt, und/oder
wobei die längliche Struktur des Aufhänger-Tragelements (110) mit ihrer Längsausdehnung parallel zu der Drehachse der Rolle (101) angeordnet ist.

5. Kabeltrommel nach einem der vorhergehenden Ansprüche, wobei der Aufhänger (103) durch eine Hakenstruktur bereitgestellt wird, die einen Hakenspalt zwischen einem Hakenende und einem Schaft umfasst, wobei der Schaft an dem Trommelträger angeordnet ist, und wahlweise wobei wenigstens ein Teil der Hakenstruktur eine Gitterstruktur umfasst.

6. Kabeltrommel nach Anspruch 5, wobei die Biegung des Hakens ferner eine konkave Aussparung in einer Oberfläche der Biegung umfasst und wahlweise wobei sich die Hakenstruktur in einer Richtung, senkrecht zu den Flanschen der Rolle (101), erstreckt.

7. Kabeltrommel nach einem der Ansprüche 1 bis 4, wobei der Aufhänger (103) durch eine Schlingenstruktur bereitgestellt wird, die sich von einem Schaft aus erstreckt, wobei der Schaft an dem Trommelträger (102) angeordnet ist.

8. Kabeltrommel nach Anspruch 5 oder Anspruch 6, wobei die Hakenstruktur einen Hals umfasst, der eine Tiefe aufweist, die wenigstens ein Dritten der Länge des Schafts der Hakenstruktur beträgt.

9. Kabeltrommel nach einem der vorhergehenden Ansprüche, wobei der Aufhänger (103) einen Aufhänger-Griffabschnitt umfasst und wobei der Aufhänger-Griffabschnitt einen rutschmindernden Oberflächenabschnitt umfasst.

10. Kabeltrommel nach einem der vorhergehenden Ansprüche, die einen Ausfahrvorspannmechanismus umfasst, um den Aufhänger (103) in der ausgefahrenen Stellung vorzuspannen.

11. Kabeltrommel nach einem der vorhergehenden Ansprüche, die einen Einziehvorspannmechanismus umfasst, um den Aufhänger (103) in der eingezogenen Stellung vorzuspannen, und wahlweise
wobei der Einziehvorspannmechanismus eine Vorspannkraft in der eingezogenen Stellung aufweist, die schwächer ist als das Gewicht der Kabeltrommel (10), wodurch der Aufhänger in der ausgefahrenen Stellung gehalten wird, wenn die Kabeltrommel durch den Aufhänger (103) getragen wird.

12. Kabeltrommel nach Anspruch 11, wobei der Einziehvorspannmechanismus einen lösbaren Haltemechanismus umfasst, um den Aufhänger (103) in der eingezogenen Stellung zu halten.

13. Kabeltrommel nach einem der vorhergehenden Ansprüche, wobei der Aufhänger (103) dafür konfiguriert ist, unter dem Gewicht der Kabeltrommel (10) zu der ausgefahrenen Stellung hin vorgespannt zu werden, wenn die Kabeltrommel (10) durch den Aufhänger (103) getragen wird.

14. Kabeltrommel nach einem der vorhergehenden Ansprüche, wobei ein Profil des Aufhängers (103), das sich von dem Rollenträger bis zu einem Ende des Aufhängers (103) erstreckt, das am weitesten von dem Rollenträger vorspringt, wenn sich der Aufhänger (103) in der ausgefahrenen Stellung befindet, eine Verjüngung zu dem Ende des Aufhängers (103) hin umfasst.

15. Verfahren zum Herstellen einer Kabeltrommel nach einem der Ansprüche 1 bis 14, wobei das Verfahren die folgenden Schritte umfasst:
Bereitstellen eines Trommelträgers (102) zum drehbaren Tragen einer Rolle (101), wobei die Rolle (101) drehbar auf dem Trommelträger um eine Rollendrehachse angeordnet ist,
Befestigen eines Aufhängers (103) an dem Trommelträger (102) und
Bereitstellen eines Mechanismus, der es ermöglicht, dass der Aufhänger (103) um eine Schwenkachse schwenkbar ist, die parallel zu der Trommeldrehachse ist, um dadurch ausgefahren zu werden, von einer eingezogenen Stellung zu einer ausgefahrenen Stellung, in welcher der Aufhänger (103) weiter von dem Trommelträger (102) vorspringt, als wenn er sich in der eingezogenen Stellung befindet, während der Aufhänger (103) an dem Trommelträger (102) befestigt bleibt.

## Revendications

1. Enrouleur de câble (10), comprenant :
un support d'enrouleur (102) pour supporter de manière rotative une bobine (101) ;
une bobine (101) disposée de manière rotative sur le support de l'enrouleur (102) autour d'un axe de rotation de la bobine ; et
un moyen d'accrochage (103) pour suspendre le support de l'enrouleur (102) ;
dans lequel le moyen d'accrochage (103) peut pivoter autour d'un axe de pivotement parallèle à l'axe de rotation de la bobine en vue de son extension par ce biais d'une position rétractée vers une position déployée, dans laquelle le moyen d'accrochage (103) déborde davantage par rapport au support de l'enrouleur (102) que dans la position rétractée ;
dans lequel le support de l'enrouleur (102) comprend un élément de support du moyen d'accrochage (110) sur le support de l'enrouleur (102), par l'intermédiaire duquel le moyen d'accrochage (103) est disposé de manière pivotante sur le support de l'enrouleur (102) ;
dans lequel l'élément de support du moyen d'accrochage (110) est une structure allongée établissant l'axe de pivotement sur lequel le moyen d'accrochage (103) est disposé de manière pivotante ;
**caractérisé en ce que** :
le support de l'enrouleur (102) comprend une structure de logement de la bobine, la structure de logement comprenant deux panneaux (109a, 109b), chaque panneau établissant un cadre dans lequel une bride de la bobine (101) est disposée de manière rotative, l'élément de support du moyen d'accrochage (110) s'étendant entre les deux panneaux (109a, 109b).

2. Enrouleur de câble selon la revendication 1, dans lequel le support de l'enrouleur comprend une structure de support péri-axiale s'étendant au-delà de la bobine (101), définissant ainsi une silhouette péri-axiale autour de la bobine (101) ; et
dans lequel le moyen d'accrochage (103) se situe à l'intérieur de la silhouette dans la position rétractée.

3. Enrouleur de câble selon les revendications 1 ou 2,
dans lequel le moyen d'accrochage (103) est monté sur le support de l'enrouleur (102) à travers un emplacement de montage fixe sur le support de l'enrouleur (102).

4. Enrouleur de câble selon l'une quelconque des revendications précédentes,
dans lequel le moyen d'accrochage (103) s'étend à partir d'une partie de l'élément de support du moyen d'accrochage (110), d'une manière laissant une partie accessible à une main d'un utilisateur, la partie fournissant ainsi une poignée, et/ou :
dans lequel la structure allongée de l'élément de support (110) est positionnée avec son extension allongée de manière parallèle à l'axe de rotation de la bobine (101).

5. Enrouleur de câble selon l'une quelconque des revendications précédentes, dans lequel le moyen d'accrochage (103) est constitué par une structure de crochet comprenant un espace de crochet entre une extrémité du crochet et une tige, la tige étant disposée sur le support de l'enrouleur, et dans lequel au moins une partie de la structure de crochet comprend optionnellement une structure en treillis.

6. Enrouleur de câble selon la revendication 5, dans lequel le coude du crochet comprend en outre un évidement concave dans une surface du coude, et optionnellement, dans lequel la structure de crochet s'étend dans une direction perpendiculaire aux brides de la bobine (101).

7. Enrouleur de câble selon l'une quelconque des revendications 1 à 4, dans lequel le moyen d'accrochage (103) est établi par une structure en boucle s'étendant à partir d'une tige, la tige étant disposée sur le support de l'enrouleur (102).

8. Enrouleur de bobine selon des revendications 5 ou 6, dans lequel la structure de crochet comprend une gorge ayant une profondeur représentant au moins un tiers de la longueur de la tige de la structure de crochet.

9. Enrouleur de câble selon l'une quelconque des revendications précédentes, dans lequel le moyen d'accrochage (103) comprend une partie de préhension du moyen d'accrochage, la partie de préhension du moyen d'accrochage comprenant une partie de surface réduisant le glissement.

10. Enrouleur de câble selon l'une quelconque des revendications précédentes, comprenant un mécanisme de rappel à extension pour solliciter le moyen d'accrochage (103) dans la position déployée.

11. Enrouleur de câble selon l'une quelconque des revendications précédentes, comprenant un mécanisme de rappel à rétraction pour solliciter le moyen d'accrochage (103) dans la position rétractée ; et optionnellement :
dans lequel le mécanisme de rappel à rétraction applique une force de rappel dans la position rétractée qui est plus faible que le poids de l'enrouleur de câble (10), retenant ainsi le moyen d'accrochage dans la position déployée, lorsque l'enrouleur de bobine est supporté par le moyen d'accrochage (103).

12. Enrouleur de câble selon la revendication 11, dans lequel le mécanisme de rappel à rétraction comprend un mécanisme de retenue libérable pour retenir le moyen d'accrochage (103) dans la position rétractée.

13. Enrouleur de câble selon l'une quelconque des revendications précédentes, dans lequel le moyen d'accrochage (103) est configuré pour être sollicité vers la position déployée sous le poids de l'enrouleur de câble (10), lorsque l'enrouleur de câble (10) est supporté par le moyen d'accrochage (103).

14. Enrouleur de câble selon l'une quelconque des revendications précédentes, dans lequel un profil du moyen d'accrochage (103) s'étendant du support de l'enrouleur vers une extrémité du moyen d'accrochage (103) débordant le plus du support de l'enrouleur, lorsque le moyen d'accrochage (103) se trouve dans la position déployée, et comprenant une conicité vers l'extrémité du moyen d'accrochage (103).

15. Procédé de fabrication d'un enrouleur de câble selon l'une quelconque des revendications 1 à 14, le procédé comprenant les étapes ci-dessous :
fourniture d'un support d'enrouleur (102) pour supporter de manière rotative une bobine (101), la bobine (101) étant disposée de manière rotative sur le support de l'enrouleur autour d'un axe de rotation ;
fixation d'un moyen d'accrochage (103) sur le support de l'enrouleur (102) ; et
fourniture d'un mécanisme permettant le pivotement du moyen d'accrochage (103) autour d'un axe de pivotement parallèle à l'axe de rotation de la bobine, en vue de son extension par ce biais d'une position rétractée vers une position déployée, dans laquelle le moyen d'accrochage (103) déborde davantage de l'enrouleur de la bobine (102) que lorsque dans la position rétractée, tandis que le moyen d'accrochage (103) reste fixé sur le support de l'enrouleur (102).
